# EUROPEAN PATENT APPLICATION

(11) **EP 0 643 916 A2**
(43) Date of publication of application: **22.03.1995**
(21) Application number: 94202296.3
(22) Date of filing: 11.08.1994
(51) Int. Cl.: A21D 10/00, A21D 2/18, A21D 2/16, A21D 13/08

(54) **Choux-mixes**

(30) Priority: 31.08.1993 EP 93202541
(71) Applicant: UNILEVER N.V., NL-3000 DK Rotterdam (NL); UNILEVER PLC, London EC4P 4BQ (GB)
(72) Inventor: Tennikat, Josef, D-27749 Delmenhorst (DE); DAetz, Otto, Postfach 1106 (DE)
(74) Representative: Rots, Maria Johanna Francisca

(57) **Abstract**

The invention concerns choux-mixes, comprising
A: a free-flowing, homogeneous powder mixture of at least:
   (1) pre-gelatinized starch and
   (2) a fat
   in a weight ratio of 1:1 to 3:1, while the fat is spray-dried
B: a free-flowing, spray-crystallized powdered fat, containing emulsifier
C: a protein and
D: a pre-gelatinized starch, the weight ratios of (A) and (B), ranging from (1:2) to (2:1)
E: optionally; a chemical leavener.

## Description

Conventionally, choux-mixes were prepared by heating a mixture of water, flour and fat. Then, eggs were added during the batter preparation. This process, however, is labour-intensive, because of the careful way the heating must performed, while the quality of the products obtained is not always satisfactory. An improvement was obtained by the introduction of powdered choux-mixes. These mixes could be free of eggs, however, they could also be made with eggs present. A disadvantage from these choux-mixes, however, is that they only could be baked in ovens provided with a steam regulating device. Moreover, often clumps were formed, when whole egg was added to the mix.
From JP 54/23167 choux-mixes are known that comprise starch and a dry, powdered mixture of fat and gluten or fat and sodium caseinate, the fat applied is spray-dried. The product obtained with such a mixture is completely hollow. We aim for products from which the internal texture is like a porous spiderweb without many big cavities. Further, we aim for choux-mixes that are completely mixable with both cold and hot water without clump-formation, while moulded batters, made from the mixes, must be suitable for baking in all types of ovens, including ovens without steam regulation. Our mixes should further have a good shelf-life, while the addition of chemical leavening agents should not affect the product performance negatively. We found that above aims could be fulfilled by applying fat in two different forms in our mixes, i.e. 1) as a homogeneous powder mixture together with a pre-gelatinized starch, wherein the mixture is made by spray-drying and 2) as a spray-crystallized powdered fat.

Therefore, our invention concerns in the first place a choux-mix comprising
A: 20-60 wt% of a free flowing, homogeneous powder mixture of at least:
   (1) pre-gelatinized starch, preferably pre-gelatinized wheat flour, and
   (2) a fat,
   wherein the weight ratio of (1) : (2) ranges from 1:1 to 3:1, while the fat is a spray-dried fat;
B: 5-15 wt% of a free flowing, spray-crystallized powdered fat, containing an emulsifier system, preferably in such quantities that the total mix contains 0.1-3 wt% emulsifier;
C: 2-15 wt% of a protein
D: 30-50 wt% of a pre-gelatinized starch, while the weight ratio of the fat components (A) and (B) ranges from (1:2) to (2:1).

The pre-gelatinized starch component (1) of component (A) can be derived from any gelatinizable starch. We, however, prefer to use a wheat-starch in the form of wheat flour.

The fat component (2) of component (A) is not critical. In fact, any fat that after spray-drying in the presence of a gelatinized starch leads to a free flowing, homogeneous powder mixture can be applied. Examples of fats that can be applied are fats from animal origin, such as butter fat, lard, tallow and fish oils, vegetable fats, however, can also be applied. Such vegetable fats can contain e.g. palm oil, soybean oil, sunflower oil, rapeseed oil, coconut oil, palm kernel oil, fully or partially hardened components of these oils; interesterified (both chemically and enzymically) fats or fat fractions.

Fat component A in general also contains some additives. Suitable additives are proteins, in particular milk proteins, emulsifiers, in particular mono- and/or diglycerides and/or lecithins and salt.

The amount of proteins in component (A) is suitably 5-15 wt% on component (A).

Fat component (A) is made by spray-drying of an aqueous mixture, containing the fat (2) and the gelatinizable starch (1). A convenient process comprises the steps of:
- boiling a mixture of water, emulsifier and fat
- adding a gelatinizable starch component, in particular wheat flour, to this mixture
- stirring the mixture, while its temperature is above 70°C
- spray-drying the mixture obtained

Fat component (B) is obtained by spray-crystallization of a mixture of a fat and an emulsifier system. Suitable fats for this component (B) can comprise one or more of the following components: soybean oil, sunflower oil, coconut oil, palm kernel oil, rapeseed oil, fish oil, butterfat, lard, tallow, hardened or partially hardened components of above fats or fat mixtures, interesterified (chemically or enzymically) fats or fractions thereof. A very suitable fat mixture contains as a fat a mixture, containing soybean oil, coconut oil, partially hardened rapeseed oil, palm oil, and hardened fish oil.

Although fat component (B) can be made separately and be added as such to a mixture of the other components A, C and D, we found that a more convenient process is obtained by performing the preparation of the choux-mix as follows:
(1) the components (A), (C), (D) are mixed at ambient temperature
(2) the mixture (1) is put on a conveyor belt
(3) a fat-emulsifier mixture B is melted by heating of the fat above 45°C
(4) the melted fat is spray-crystallized in a spray-crystallization tower with a temperature of less than -15°C
(5) the product (4) and the mixture of (1) are transported on the conveyor belt to a drum mixer.

The spray-crystallization is usually carried out in such a way that the particle size of fat component (B) is 50-100 µm.

Although component (C) of our choux-mix could be any protein, including animal and vegetable proteins, we prefer to use proteins derived from egg-white and/or milk.

The pre-gelatinized starch component (D) can be selected from any pre-gelatinized starch. Sources for such starches are e.g. maize, potato or tapioca, wheat, but other sources are known as well. The starches can be applied as such, or after a chemical treatment (including enzymic treatments). Very suitable gelatinizable starches are e.g. Presol P7® (National Starch), Halofarin®, natural wheat starch, boiled wheat flour or dextrines.

In order to improve the performance, in particular its volume and porosity of the products made from our choux-mix, we add some chemical leavening agent and some salt to the mixes. Suitable leavening agents are NaHCO₃, glucono-δ-lacton, but also baking powders, such as "Vogeley Backfroh Sp"®.
Suitable levels for the leavening agents are 1-5 wt% (on total choux-mix), preferred amounts being not less than 3.5 wt%. Salt is applied in amounts up to 2 wt%, preferably up to 0.2 wt% to improve the taste.

Our choux-mixes can be used for the preparation of a choux-batter. The choux-batters obtained are also part of the invention.

The choux-batters according to the invention comprise the choux-mix according to the invention, water and whole egg, preferably in weight ratios in the range of 1:(0.75-1.25):(1.2-2.0) (i.e. choux-mix:water:egg).

Choux-products can be made from the choux-batter. These products have a very fine, porous, spiderweb texture. Therefore, part of the invention is also the product obtained after moulding of a pre-selected amount of the choux-batter according to the invention, baking of the moulded choux-batter and filling of the baked, moulded choux-batter.

### Example

### I. Recipe

| | |
|---|---|
| - spray-dried fat/gelatinized wheat flour mix (a product from MMW-Germany) | 38.5 wt% |
| - Presol P-7® (National Starch) | 31 |
| - Halofarin® | 5.9 |
| - protein (egg and milk) | 6.6 |
| - wheat-starch | 3.8 |
| - crystallized fat, containing emulsifier | 10.0 |
| - salt | 0.2 |
| - leavening agent | 4.0 |

The spray dried fat/gelatinized starch mix contained:
27 wt% fat
17 wt% protein
51 wt% gelatinized starch
1 wt% minerals
4 wt% water
The crystallized fat, contained 86% fat and 14% emulsifier.

### II Procedure

All components, except the spray-crystallized fat were mixed at ambient temperature. The mixture was fed to a conveyor belt and transported to the exit of a spray-crystallization tower.

The spray-crystallization tower was provided with a melted mixture (T about 50°C) of fat and emulsifier. The fat mixture consisted of: 6% bean oil, 22% coconut oil, 12% rapeseed oil component. 6% palm oil and 54% fish oil components.
The mixture was spray-crystallized while the temperature of the tower was about -25°C.
The spray-crystallized fat and the other components the conveyor belt were transported to a drum mixer and mixed for 20 min.

### III Preparation of choux-batter

Choux-mix obtained under II, water and whole egg were mixed in a weight ratio of 1:1:1.6, using a Hobart-mixer®.

### IV Baking of Choux-products

40 gram portions of the choux-batter (III) were placed on a baking plate. Part of the portions were baked in a Sticken oven at 190°C, and part of the portions were baked in a conventional oven with steam regulation at 210°C.
Baking times: 25 min.
In both cases excellent choux-products were obtained that had a fine, porous spiderweb texture.

## Claims

1. Choux-mix, comprising
A: 20-60 wt% of a free flowing, homogeneous powder mixture of at least:
(1) pre-gelatinized starch and
(2) a fat,
wherein the weight ratio of (1) : (2) ranges from 1:1 to 3:1, while the fat is a spray-dried fat;
B: 5-15 wt% of a free flowing, spray-crystallized powdered fat, containing an emulsifier system;
C: 2-15 wt% of a protein
D: 30-50 wt% of a pre-gelatinized starch,
while the weight ratio of the fat components (A) and (B) ranges from (1:2) to (2:1).

2. Choux-mix according to claim 1, wherein the pre-gelatinized starch component of component (A) is derived from wheat flour.

3. Choux-mix according to claim 1, wherein the fat-component of component (A) is selected from animal or vegetable fat, in particular from hardened fish oil, or hardened vegetable fats.

4. Choux-mix according to claim 1, wherein the fat component (A) also contains additives, selected from proteins, in particular milk proteins, emulsifier(s) and salt.

5. Choux-mix according to claim 4, wherein the protein component is milk protein, which is present in 5-15 wt%.

6. Choux-mix according to claim 1, wherein the fat component (B) contains as a fat a mixture, containing soybean oil, coconut oil, partially hardened rapeseed oil, palm oil, and hardened fish oil.

7. Choux-mix according to claim 1, wherein the emulsifier system of component (B) comprises mono- and diglycerides and lecithin.

8. Choux-mix according to claim 1, wherein the protein component (C) is selected from egg-white and/or milkprotein.

9. Choux-mix according to claim 1, wherein the pre-gelatinized starch component (D) is selected from one or more of the pre-gelatinized components of the group, consisting of: chemically treated maize starch, natural wheat starch, boiled wheat flour, dextrines.

10. Choux-mix according to claim 1, wherein the mix additionally contains one or more chemically leavening agents and salt.

11. Choux-mix according to claim 1, wherein the fat component (B) has a particle size of 50-100 µm.

12. Choux-batter, comprising the choux-mix of claims 1-11, water and whole egg in a weight ratio of 1:(0.75-1.25) : (1.2-2.0).

13. Process for the preparation of a choux-mix with the composition of claims 1-11, wherein:
(1) the components (A), (C), (D) are mixed at ambient temperature
(2) the mixture (1) is put on a conveyor belt
(3) a fat-emulsifier mixture B is melted by heating of the fat above 45°C
(4) the melted fat is spray-crystallized in a spray- crystallization tower with a temperature of less than -15°C
(5) the product (4) and the mixture of (1) are transported on the conveyor belt to a drum mixer.

14. Process according to claim 13, wherein the fat component (A) is made by boiling of a mixture of water, emulsifier and fat; adding a gelatinizable starch component to this mixture and stirring the mixture, while above 70°C; wherepon the mixture, obtained is spray-dried and the spray-dried product is used as fat component (A)

15. Choux-products, obtained after moulding of a pre-selected amount of the choux-batter of claim 12, baking of the moulded choux-batter and filling of the baked, moulded choux-batter.
